# EUROPEAN PATENT APPLICATION

(11) **EP 2 975 885 A1**
(43) Date of publication of application: **20.01.2016**
(21) Application number: 14762353.2
(22) Date of filing: 11.03.2014
(51) Int. Cl.: H04W 48/16, H04W 52/02, H04W 88/06

(54) **METHOD AND APPARATUS FOR WIRELESS COMMUNICATION**

(30) Priority: 11.03.2013 KR 20130025754
(71) Applicant: Samsung Electronics Co., Ltd., Suwon-si, Gyeonggi-do 443-742 (KR)
(72) Inventor: KIM, Wooseong, Gwacheon-si Gyeonggi-do 427-734 (KR); KIM, Soenghun, Suwon-si Gyeonggi-do 443-851 (KR); JANG, Jaehyuk, Suwon-si Gyeonggi-do 443-751 (KR); KIM, Sangbum, Suwon-si Gyeonggi-do 443-751 (KR); JEONG, Kyeongin, Yongin-si Gyeonggi-do 446-707 (KR)
(74) Representative: Nederlandsch Octrooibureau
(86) International application number: PCT/KR2014/002015
(87) International publication number: WO 2014/142526

(57) **Abstract**

The present invention relates to a method and an apparatus for a wireless communication. The communication method by a user equipment, according to an embodiment of the present invention, may include: receiving information on a second communication network base station from a first communication network base station through a first communication unit; and scanning the second communication network base station by using the information on the second communication network base station. According to an embodiment of the present invention, a user equipment can efficiently scan a wireless LAN base station and other heterogeneous network base stations.

## Description

### Technical Field

The present invention relates to a wireless communication system and, more particularly, to a method and an apparatus for searching for and selecting a neighboring network by a user equipment in the system in which heterogeneous networks coexist

### Background Art

Recently, wireless communication technology has achieved rapid development, and thus the communication system technologies have constantly evolved. The evolved technologies include a UMTS, which is a 3G mobile communication technology, and a LTE system, which is spotlighted as a 4G mobile communication technology.

In addition, the wide-spread use of smart phones has rapidly increased the amount of data used by users, and, in order to handle such a rapid increase of the amount of data used, mobile communication network providers have attempted to distribute user's data by using an additional wireless LAN interworking with an existing mobile communication network (i.e., a 3G or 4G cellular network)

However, the cellular network and the wireless LAN have not yet inteworked closely with each other. That is, today, the cellular network and the wireless LAN operate independently, except for a limited number of functions (e.g., authentication).

As a result, when attempting to use a wireless LAN, a user equipment should continuously search for a neighboring wireless LAN AP because the user equipment does not know the location of a wireless LAN Access Point (AP). The continuous search for the neighboring wireless LAN AP causes excessive power consumption by the user equipment. Also, during the continuous search for the neighboring wireless LAN AP, the LAN power of the user equipment must be always on. For Wireless Fidelity (WI-FI) scanning, the user equipment continuously attempts to receive a beacon signal and this WI-FI scanning also causes excessive battery drain by the user equipment.

Therefore, the above-mentioned problems require a solution using the interworking between a cellular network and a wireless LAN, which are accessed by a user equipment, in order to solve the problems. Herein, a system that includes a cellular network and a wireless LAN is cited as an example, but other heterogeneous network systems also have similar problems.

### Disclosure of the Invention

### Technical Problem

An embodiment of the present invention provides a method for efficiently searching for a base station and an AP by a user equipment in a heterogeneous network wireless communication system, the method being created to solve the above-mentioned problems.

### Solution to Problem

The communication method by a user equipment, according to an embodiment of the present invention, may include: receiving information on a second communication network base station from a first communication network base station through a first communication unit; and scanning the second communication network base station by using the information on the second communication network base station.

The user equipment, according to an embodiment of the present invention, may include a first communication unit for receiving information on a second communication network base station from a first communication network base station, and a second communication unit for scanning the second communication network base station by using the information on the second communication network base station.

The communication method of a base station, which provides a first communication network service, may include: transmitting, to a user equipment, information on a second communication network base station inside the region of the base station and ordering the user equipment to distribute traffic through the second communication network base station, when receiving, from the user equipment, a report indicating that the second communication network base station has been discovered.

The base station, which provides a first communication network service, may include a communication unit which transmits, to the user equipment, information on a second communication network base station inside the region of the base station, and orders the user equipment to distribute traffic through the second communication network base station, when receiving, from the user equipment, a report of indicating that the second communication network base station has been discovered.

### Advantageous Effects of Invention

According to an embodiment of the present invention, a user equipment may efficiently search for an AP or a base station, thereby minimizing the power consumption thereby.

### Brief Description of the Drawings

FIG. 1 illustrates the structure of an LTE system to which an embodiment of the present invention is applied;
FIG. 2 illustrates the region of each base station and APs of a LTE system to which an embodiment of the present invention is applied;
FIG. 3 is a flowchart illustrating a communication process according to the first embodiment of the present invention;
FIG. 4 is a flowchart illustrating a process of searching for a wireless LAN AP by a user equipment 301 according to the first embodiment of the present invention;
FIG. 5 illustrates a beacon scanning process according to the second embodiment of the present invention;
FIG. 6 is a flowchart illustrating a process of searching for a wireless LAN AP according to the second embodiment of the present invention;
FIG. 7 is a flowchart illustrating a process of searching for a wireless LAN AP according to the third embodiment of the present invention;
FIG. 8 illustrates beacon information according to the third embodiment of the present invention;
FIG. 9 is a flowchart illustrating a process of searching for a wireless LAN AP according to the forth embodiment of the present invention;
FIG. 10 is a flowchart illustrating a process of searching for a wireless LAN AP by a user equipment according to the forth embodiment of the present invention;
FIG. 11 is a block diagram of the user equipment 1100 according to an embodiment of the present invention;
FIG. 12 is a block diagram of a first communication network base station 1200 according to an embodiment of the present invention;
FIG. 13 is a block diagram of a second communication network base station 1300 according to an embodiment of the present invention.

### Mode for the Invention

In the following description of the present invention, a detailed description of known configurations or functions incorporated herein will be omitted when it is determined that the detailed description may make the subject matter of the present invention unclear. Hereinafter, embodiments of the present invention will be described with reference to the accompanying drawings.

In the present specification, for convenience sake, the description will be made focusing on a Long Term Evolution (LTE) system as an example of a cellular network but may also be applied to another cellular network, for example, a Universal Mobile Telecommunications System (UMTS). In addition, the embodiments of the present invention may be applied to other heterogeneous network systems unless it is difficult to apply embodiments of the present invention to them.

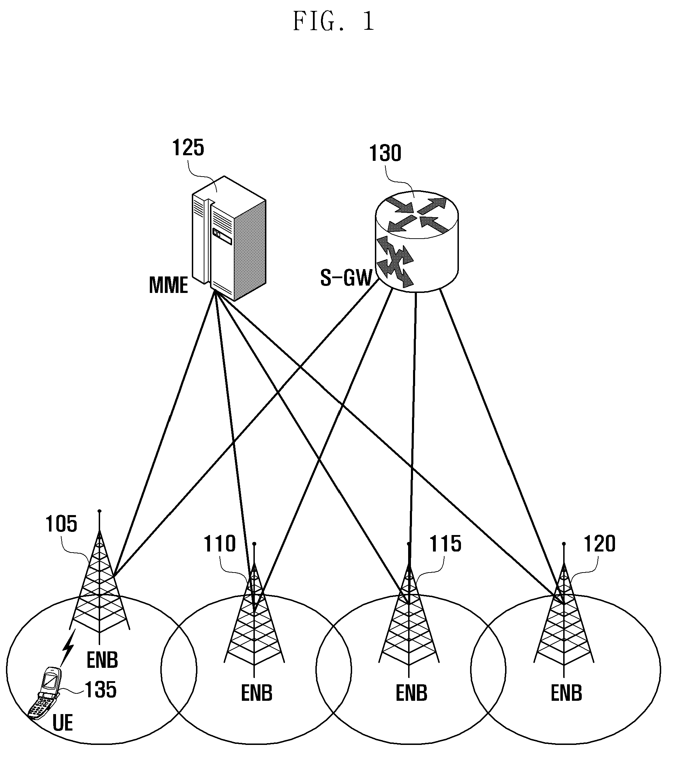

FIG. 1 illustrates the structure of an LTE system to which an embodiment of the present invention is applied.

Referring to FIG. 1, a wireless access network of a LTE system includes: next-generation base stations (hereinafter "Evolved Node B (ENBs)," "Node Bs," or "base stations") 105, 110, 115, and 120; a Mobility Management Entity (MME) 125; and a Serving-Gateway (S-GW) 130. A User Equipment (hereinafter, "UE" or "terminal") 135 accesses an outer network through the ENBs (105-120) and the S-GW 130.

The ENBs 105-120 in FIG. 1 correspond to the existing Node B of a UMTS. An ENB 105 is connected to the UE 135 through a wireless channel. The ENBs 105-120 play a more complicated role than the existing Node B. In an LTE system, all user traffic that include a real-time service such as a Voice over IP (VoIP) through an internet protocol are provided through a shared channel. Therefore, the LTE system requires an apparatus for gathering and scheduling state information such as the buffer state of UEs, the available transmission power state thereof, and the channel state thereof; and the ENB 105-120 serve as such an apparatus. One ENB generally controls multiple cells. In order to implement a transmission rate of 100 Mbps, the LTE system uses an Orthogonal Frequency Division Multiplexing (hereinafter, referred to as "OFDM") as a wireless access technology in a bandwidth of 20 MHz. Also, a modulation scheme and an Adaptive Modulation & Coding (hereinafter, referred to as "AMC") scheme, which determines the channel coding rate, are applied according to the channel state of a UE. The S-GW 130 is a device for providing a data bearer, and generates or removes the data bearer under a control of the MME 125. The MME 125 is a device for performing various control functions as well as a mobility management function with respect to the UE and is connected to multiple base stations.

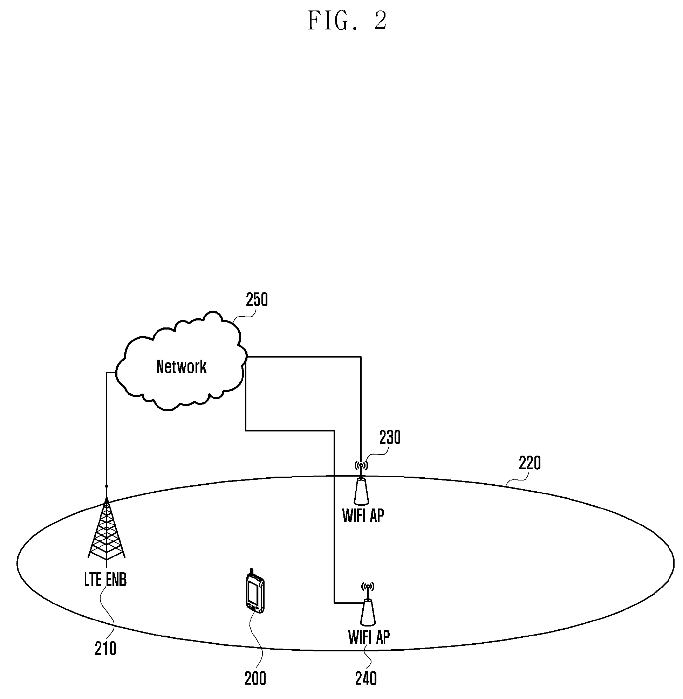

FIG. 2 illustrates the region of each base station and APs of an LTE system to which an embodiment of the present invention is applied.

Referring to FIG. 2, a UE 200 is located inside the region 220 of a base station 210 in an LTE system. The UE 200 is in a state in which the UE has accessed the base station 210 and has been allocated a wireless resource; or is in a sleep mode. The UE 200 may continuously receive system information from the base station 210. Also, multiple wireless LAN Access Points (APs) 230 and 240 are located inside the region 220 of the base station 210. The UE 200 has a wireless LAN communication unit embedded therein, which can access the wireless LAN Access Points 230 and 240.

Inside the region 220 of the base station 210, wireless LAN APs 230 and 240 included in a network 250, which operates the LTE system, may coexist with wireless LAN APs included in a network of another operator. In this case, APs are distinguished from each other using a Service Set Identifier (SSID) or a Basic Service Set Identifier (BSSID) and thus the UE 200 can distinguish an accessible network.

An authentication process, which is required for a UE to actually access a network to receive data therefrom, is determined according to subscription or non-subscription of the UE. A beacon frame transmission configuration and channel, which are used by the wireless LAN APs 230 and 240, can be established by a user, and relevant information may be stored in network equipment or at a server within the operator's network and may be managed thereby.

Some embodiments of the present invention include the processes of: exchanging information on the beacon frame transmission between LTE ENB 210 and WIFI APs 230 and 240, which are described in FIG. 2 (indirectly exchanging through a management equipment within a network); transmitting system information that contains a beacon window configuration for receiving the beacon frame for the UE 200 of ENB 210; and receiving the beacon frame by the UE 200.

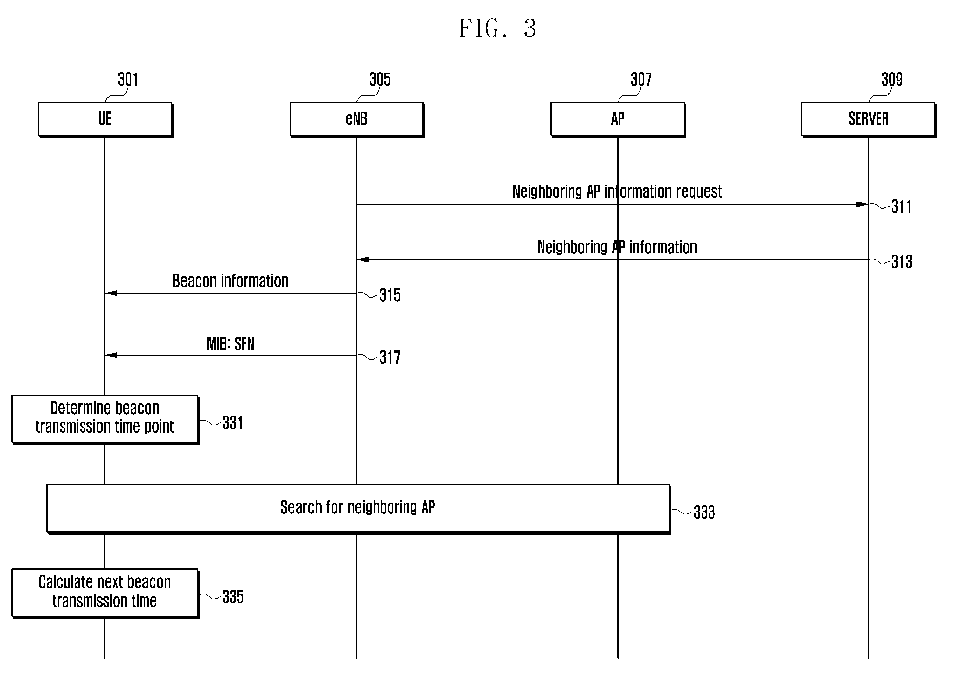

FIG. 3 is a flowchart illustrating a communication process according to the first embodiment of the present invention.

In an embodiment in FIG. 3, it is assumed that there is a server 309 for managing the location of a wireless LAN AP, which is operated by a network provider (or can be operated by the network provider). This server 309 may be referred to as an AP information providing apparatus or an AP information management apparatus. Hereinafter, a wireless LAN AP, which is operated by a provider or which can be provided by the provider to subscribers for use in cooperative or other manners, is referred to as a provider's AP. Hereinafter, it is assumed that the network provider can possess and/or manage the server 309, or can obtain/store necessary information in communication with the server 309.

Referring to FIG. 3, in step 311, a base station 305 in a cellular network transmits, to the server 309, a request message for requesting information on a wireless LAN AP within the coverage of the base station 305. The server 309, which has received the request message, transmits neighboring AP information to the base station 305 in step 313. The neighboring AP information may include information on whether the AP is within the coverage of the base station 305 and information on a beacon transmission (beacon transmission information). According to a modified example, step 311 is omitted and the server 309 can transmit the information to the base station 305 when particular conditions have been satisfied or when the period has begun. According to another modified example, the base station 305 may obtain neighboring AP information in another manner, instead of receiving the neighboring AP information from the server 309.

In the first embodiment, it is assumed that APs 307, which are operated by a provider, can use separate channels but the APs 307 are configured to have the same Target Beacon Transmission Time (TBTT) and the same beacon transmission interval.

Information that can be contained in the neighboring AP information may include at least a part of the following. In the following description, although the information has not been limited to information on a "provider's" AP, if the provider cannot actually manage an AP or cannot obtain information on the AP, the information on the AP will certainly not be included in the information of the surroundings below. Therefore, the information included in the neighboring AP information will be limited to the information that can be obtained by the provider, which is the server 309.
1. List of APs within a cell region
2. Channel used by each AP
3. Common TBTT and Beacon Transmission Interval of APs. This information may include the field of at least a part of 3.1 to 3.3 below.
3.1. Wireless LAN identifier (e.g. SSID in 3.1.1 or BSSID in 3.1.2 below)
3.1.1. Service Set Identifier (hereinafter, referred to as "SSID"): a text of 32-byte length. The identifier that a user can usually see when searching for a neighboring wireless LAN
3.1.2. Basic Service Set Identifier (BSSID)
3.2. Information on the channel (e.g. 1ch, 3ch, 6ch) used by each AP and Priority information
3.3. Information on Common TBTT and Beacon Transmission Interval of APs (the information in 3.3.1 and/or 3.3.2)
3.3.1. TBTT (e.g. GPS time value) indicated using the absolute time and interval value indicated using Time Unit (TU, 1024 usec) in a synchronization system
3.3.2. TBTT (e.g. +11.21 sec) indicated using the relative time value and interval value indicated using TU, in an asynchronous system

In step 315, the base station 305, which has received the neighboring AP information from the server 309, transmits beacon information to a UE on the basis of the neighboring AP information received. The beacon information may be configured, for example, in the form of a Beacon Schedule Information Element (IE). A broadcast scheme or a unicast scheme may be used as the transmission scheme, which is used for the transmission in step 315. That is, as is the case that the base station 305 in a cellular network broadcasts system information, the base station 305 can give information to all UEs within a cell at once using a predetermined SystemInformationBlock (SIB) or give the information to the UEs individually using a message of Radio Resource Control (hereinafter, referred to as "RRC") layer. The beacon information, which the base station 305 can transfer to a UE 301 in step 315, may include at least a part of the following information.
1. Whether a provider's wireless LAN AP is inside the region of the base station 305 (1 bit)
2. Or, the detailed information below may be transmitted instead of information in No. 1
2.1. A wireless LAN identifier that can be searched for by the current base station 305
2.1.1. The wireless LAN identifier may be, for example, SSID OR BSSID.
2.2. Wireless LAN AP channels and priority, which can be searched for by the current base station 305
2.3. Window information for the purpose of Beacon scanning (2.3.1 to 2.3.3 are included)
2.3.1. Starting point = offset for subframe corresponding to TBTT or a corresponding value
2.3.2. Interval (indicated using sub-frame unit or TU): When a period in units of subframe or smaller is generated, a correction is necessary.
2.3.3. Width = n (larger than or equal to 1 ms, e.g. 10 ms): a parameter which indicates how long to monitor a beacon signal for every TBTT. A value as small as possible, in consideration of the length of the beacon signal and the delay of the transmission thereof, is selected.

The UE 301, which has received beacon information, calculates a System Frame Number (SFN) and a subframe, which correspond to a TBTT at which a beacon frame starts to be transmitted. For example, when a TBTT is transmitted in the combination (coupling) of an SFN and a subframe value, the TBTT may be indicated in the form of the first beacon (SFN = 1, subframe = 0), the second beacon (SFN = 10, subframe = 2) and the third beacon (SFN = 20, subframe = 1).

According to a modified example to, the TBTT may be indicated by only using a subframe such as the first beacon (subframe = 10), the second beacon (subframe = 102), and the third beacon (subframe = 201).

According to another modified example, the TBTT may be transmitted in the form of not list but offset. In this case, TBTT = Interval * n + offset. Herein, n is an integer, and when TBTT is larger than or equal to 10240, the TBTT is configured by TBTT = TBTT - 10240.

In step 315, when an interval value is transmitted in the form of TU, the UE 301 obtains a subframe unit value through a floor calculation of a TU value in order to obtain a TBTT value. On the other hand, if an interval value is transmitted in units of subframe, it corresponds to a case in which the base station 305 transmits an interval value in units of subframe, which has been calculated through the floor calculation of an interval value in the form of TU. In either case, therefore, since the estimated time of TBTT in a system is gradually accelerated, the time should be corrected. For example, if interval = 100 TU = 102.4 msec, the interval has a value of 102 subframes after the floor calculation. In this case, a TBTT calculated by the UE at the second or third interval may precede the actual TBTT by 1 msec or more. This error can be overcome by using a scheme in which the UE 301 adjusts wake-up time by itself or a scheme in which the base station 301 adjusts the offset value transmitted in step 315 at a particular time point (at the time for list updating by a base station, e.g. after 1024 SFN)

In step 317, the base station 305 transmits a Master Information Block (MIB) to the UE 301. The MIB includes an SFN. In step 331, the UE 301 determines whether to reach the beacon transmission time point. For example, when the UE 301 receives an SFN corresponding to TBTT or determines, through internal time estimation, that it has become the SFN corresponding to the TBTT, the UE 301determines that the time has reached the beacon transmission time point. When the time has reached the beacon transmission time point, the UE 301 starts to search for a neighboring wireless LAN AP at the subframe within the SFN corresponding to the received TBTT. Since the unit of TBTT is TU, TBTT may not be synchronized with the base station subframe. If a TBTT starts during a subframe, an operation for searching for a wireless LAN must be prepared from the corresponding subframe start. First, when the beacon information received in step 315 indicates the absence of a provider's wireless LAN AP within the region of the base station, the UE 301 may skip an operation of unnecessarily searching for a neighboring wireless LAN AP. If the power of a wireless LAN communication unit of the UE 301 has been interrupted, the UE 301 may display the existence of an accessible wireless LAN located around the UE to the user of the UE 301 through a display unit or other means, and may provide, to the user, an interface for determining whether to turn on the power of the wireless LAN. According to another modified embodiment, when the user of the UE 301 has made an agreement with a business provider through a contract, the UE 301 may automatically turn on the power of the wireless LAN communication unit, which has been turned off after the message was received in step 315, without a separate input of the user and try to search for a wireless LAN.

For the determination in step 331, the UE 301 monitors SFN information that is included in a MIB received from a base station. Thereafter, the UE 301 switches the wireless LAN communication unit to a wake-up mode and receives a beacon frame from an AP corresponding to a BSSID.

When the UE 301 has received information on a wireless LAN identifier and a particular frequency channel in step 315, the UE 301 only has to search for a wireless LAN AP corresponding to the wireless LAN identifier and the particular channel. If not, the UE 301 searches for a wireless LAN AP according to the channel priority set inside the UE 301. When receiving a beacon frame from a wireless LAN AP 307, the UE 301 identifies a wireless LAN identifier of the wireless LAN AP 307. If a wireless LAN is decided to not be continuously used after receiving the beacon frame or after terminating a window width, the wireless LAN communication unit is switched to a sleep mode or a deep sleep mode. In step 335, the UE 301 calculates (SFN + subframe value) corresponding to a next TBTT.

Thereafter, the UE continues to repeat the same process of receiving a beacon frame at the calculated next TBTT point as mentioned above, while identifying an SFN value transmitted from a base station. When failing to receive the beacon frame, the UE retries at the next TBTT and when reception is impossible, the UE moves to another channel and then receives a beacon frame at TBTT.

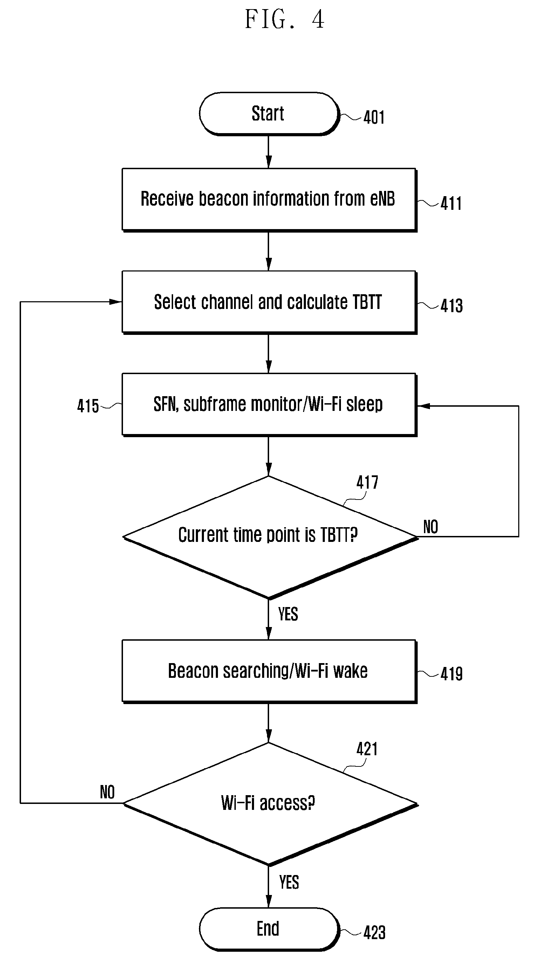

FIG. 4 is a flowchart illustrating a process of searching for a wireless LAN AP by a UE 301 according to the first embodiment of the present invention.

Referring to FIG. 4, in step 411, the UE 301 receives beacon information from the base station 305. The received beacon information is as follows. The beacon information received is as follows:
1. Whether a provider's wireless LAN AP is inside the region of the base station 305 (1 bit)
2. Or, the detailed information below may be transmitted instead of information in No. 1
2.1. A wireless LAN identifier that can be searched for by the current base station 305
2.1.1. The wireless LAN identifier may be, for example, SSID OR BSSID.
2.2. A wireless LAN AP channel and priority, which can be searched for by the current base station
2.3. Information on a common TBTT and interval of the corresponding wireless LAN, offset information corresponding to TBTT, and a scanning window width.

The beacon information in step 411 is substantially identical to the beacon information disclosed in the description of step 315 in FIG. 3 and thus the detailed description of the beacon information in step 411 will be omitted herein.

In step 413, the UE 301 selects a wireless LAN channel using the received beacon information and calculates a TTBT and an interval. The TBTT may be transmitted in the form of an SFN and a subframe or in the form of offset information, and the interval may also be transferred in the form of a subframe or a Wi-Fi TU value. Therefore, the next TBTT may have a value that is 1 larger than a value obtained by adding subframes corresponding to the interval size to the subframes of the current TBTT. Or, when an interval value is transmitted by TU, each TU value is 1024 usec and thus a TBTT may be located in the middle of subframes. In that case, the subframes of the TBTT are corresponding subframes at the middle of which the TBTT is located. That is, when converted in units of subframe, the TBTT of the TU is converted through a floor calculation.

In step 415, the UE 301 continuously receives SFN information from the base station 305 in a sleep mode or monitors whether the current SFN is an SFN including the corresponding TBTT by using an internal clock.

In step 417, the UE 301 determines whether the current time point is a time point at which a subframe corresponding to a TBTT is received. If the current SFN and subframe are prior to a TBTT, the process continuously proceeds to step 415 in which the UE 301 monitors the SFN and the subframe. If the current subframe corresponds to a TBTT, the process proceeds to step 419 and the UE 301 switches a wireless LAN communication unit to a wake-up mode and starts to receive a beacon frame.

Also, in step 419, the UE 301 searches for beacon frames of a neighboring wireless LAN AP through a passive scanning and, in step 421, the UE 301 performs the process of accessing the wireless LAN AP when the searched wireless LAN AP is identical to the wireless LAN identifier received in step 411.

If, as a result of determination, the UE 301 does not access the wireless LAN AP and is continuously connected to a base station, or fails to receive the beacon frame within a scanning window, or when the UE 301 has attempted to access the wireless LAN AP but has not been allowed to access the wireless LAN AP, the UE 301 calculates a next TBTT and selects whether to change a channel; and the wireless LAN communication unit is switched to a sleep mode. When accessing a wireless LAN AP, a UE can access a general wireless LAN through an access process and transceive data.

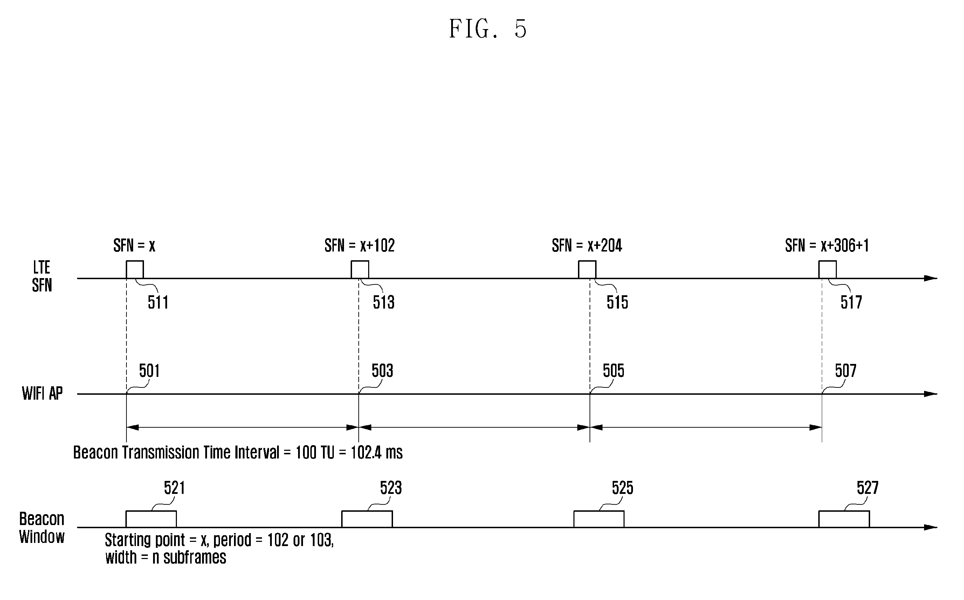

FIG. 5 illustrates a beacon scanning process according to the second embodiment of the present invention.

Referring to FIG. 5, according to the first embodiment, a base station configures an SFN unit starting point and informs a UE of the starting point. For example, referring to FIG. 5, the first starting point (501) of beacon transmission is located at an SFN x 511 and a beacon transmission interval is 100 TU (=102.4 ms). A WIFI AP starts to transmit beacon information to TBTTs 501, 503, 505, and 507 according to a fixed beacon transmission interval. The base station configures SFNs 511, 513, 515, and 517 including the TBTTs 501, 503, 505, and 507 to make the UE attempt to receive a beacon. Therefore, the UE attempts to receive a beacon during beacon windows 521, 523, 525, and 527 starting from the SFNs 511, 513, 515, and 517.

The beacon window information, which a base station provides to a UE in order to scan a beacon, may be composed, for example, in any one among three manners below.
1. Beacon Window Information - first manner
1.1. Starting point = x (an integer from 0 to 1023). SFN including a sub frame nearest to TBTT
1.2. Interval: Transmitted in units of subframe. When a period in units of subframe or smaller is generated, a proper correction is necessary. For example, a period of 102.4 msec is corrected to 102 or 103. With reference to x, 103 is applied to the (x+k)th period (k is a multiple of 3) while 102 is applied to the remainder. In the case of FIG. 5, the difference between the SFN 517 to receive the fourth beacon and the SFN 515 to receive the third beacon is 103, and the other SFNs show a difference having a value of 102 between themselves.
1.3. Width = n (1 - e.g. 10 ms): a parameter that indicates how long to monitor a beacon signal each TBTT. A value as small as possible, in consideration of the length of the beacon signal and the delay of the transmission thereof, is selected.
2. Beacon Window Information - second manner
2.1 List of starting points within particular time (e.g., 1024 SFN = 1024 msec = 10000 TU): a set of SFNs that indicate beacon transmission timing. If the beacon transmission period is 100 TU, the list of starting points consists of 9 or 10 integers. For example, if x equals 10 and the transmission period is 102.4 ms, the integers are 10, 112, 215, 318, ...
2.2. Width = n (1 - e.g. 10 ms): the same as the first manner
3. Beacon Window Information - third manner
3.1 Starting point = x (an integer from 0 to 1023). The same as the first manner
3.2 Width = n (1 - e.g. 10 ms): the same as the first manner
3.3 Interval: TU unit (multiple of 1024 usec) or an indicator for the preset period value. It is determined that the beacon window starts at a time point (including preceding/following) spaced apart by the interval.

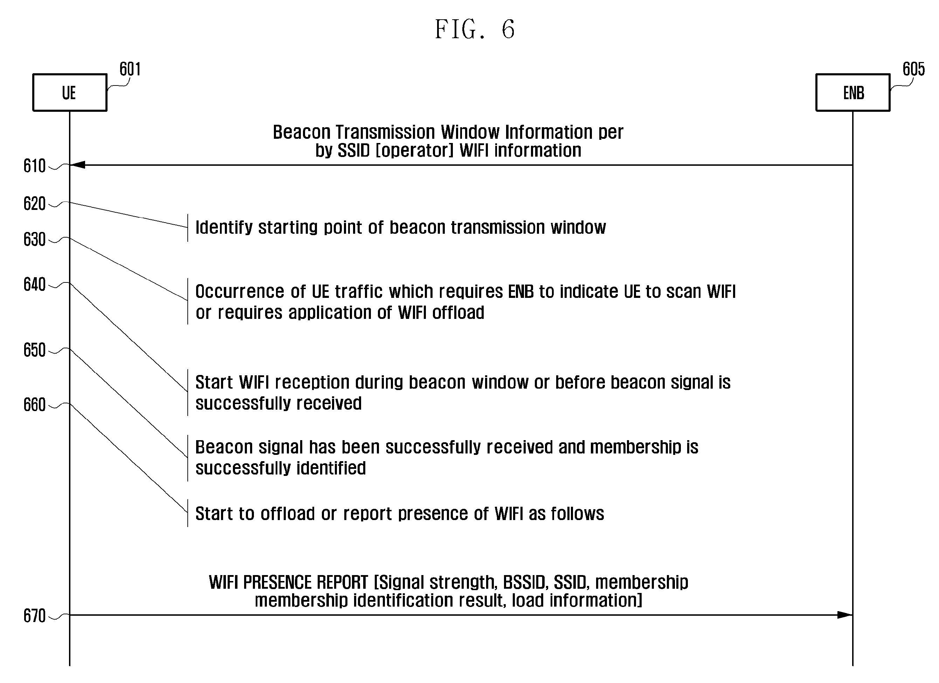

FIG. 6 is a flowchart illustrating a process of searching for a wireless LAN AP according to the second embodiment of the present invention.

Referring to FIG. 6, in step 610, a base station 605 transmits information on a beacon transmission (beacon information). The base station 605 can also transmit information on a Wi-Fi operator, for example, information on SSIDs of wireless LAN APs inside the region of the base station 605 and information on channels thereof.

In step 620, a UE 601 identifies the starting point of a beacon transmission window (beacon scanning window), using the beacon information received. In step 630, the UE 601 detects a traffic offload to be needed. The traffic offload means that traffic is distributed through a wireless LAN AP (other wireless communication means). For example, when the base station 605 instructs the UE 601 to scan a wireless LAN or when a UE traffic to which a wireless LAN offload is required to be applied occurs, the UE 601 can detect the traffic offload to be needed.

In step 640, the UE 601 performs a scanning operation during a corresponding beacon scanning window or before receiving a beacon frame. In step 650, the UE 601 successfully receives a beacon signal and identifies that a wireless LAN identifier is the same as an identifier transferred from the base station 605. In this case, the UE 601 starts a traffic offload in step 660. According to a modified example, step 660 is omitted and a traffic offload may start on the basis of the instruction of the base station 605 after the reporting step in step 670. In step 670, the UE reports the base station 605 on the presence of an accessible wireless LAN AP. The report transferred in step 670 includes at least a part of: the wireless LAN received signal strength (signal quality) as well as a wireless LAN BSSID; a membership check result; and load state information. The UE 601 starts an offload through the corresponding wireless LAN AP on the basis of the instruction of the base station 605.

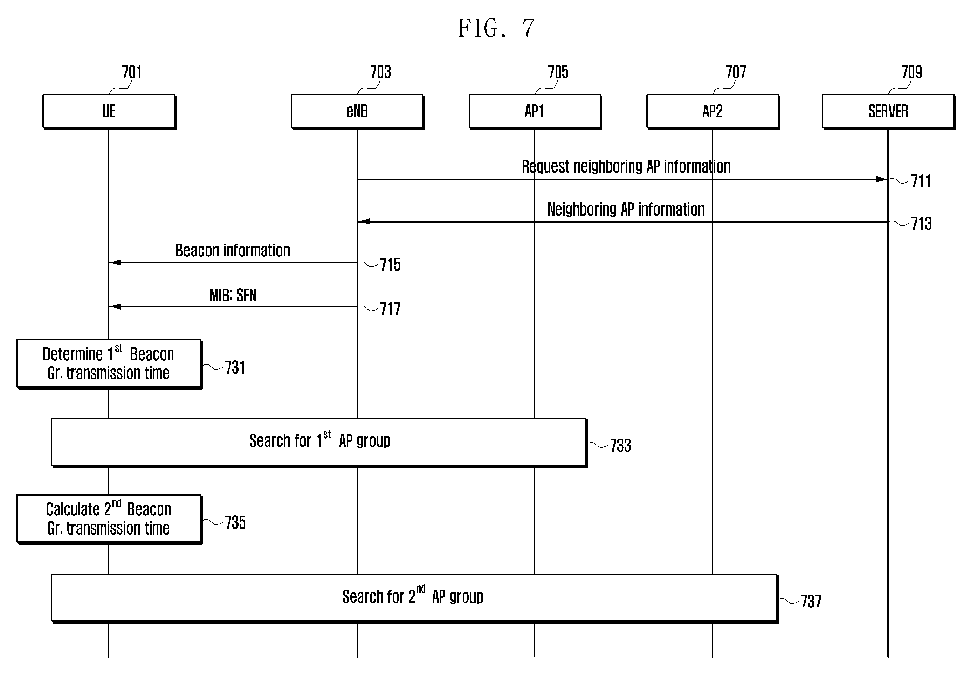

FIG. 7 is a flowchart illustrating a process of searching for a wireless LAN AP according to the third embodiment of the present invention.

Referring to FIG. 7, in the embodiment of FIG. 7, Target Beacon Transmission Times (TBTT) and separate interval values of Access Points (hereinafter, referred to as "APs") 705 and 707 of a wireless LAN, which are operated by a network provider, may be configured to have different values, respectively. In this case, the wireless LAN APs 705 and 707 may have separate TBTTs and separate interval values or have separate TBTTs and same interval value. As in the first embodiment, a server 709 has information on wireless LAN APs inside the region of a base station 703.

In this case, in step 711, each base station 703 in a cellular network transmits, to the server 709, a message of requesting for the list of TTBTs of wireless LAN APs 705 and 707 inside of the signal coverage region of the base station 703 and intervals thereof, which is neighboring AP information. The server 709, which has received the request message, transmits the neighboring AP information to the base station 703 in step 713. The neighboring AP information may include an indicator indicating whether an AP operated by a provider exists inside the region of the base station 703 and a beacon frame transmission information. According to a modified example, step 711 is omitted and the server 709 can transmit the information to the base station 703, on a periodic basis or when particular conditions have been satisfied. According to another modified example, the base station 703 may obtain neighboring AP information in another manner, instead of receiving the neighboring AP information from the server 709.

Information that can be contained in the neighboring AP information transferred in step 713 may include at least a part of the following. In the following description, although the information has not been limited to information on a "provider's" AP, if the provider cannot actually manage an AP or cannot obtain information on the AP, the information on the AP will certainly not be included in the information of the surroundings below. Therefore, the information included in the neighboring AP information will be limited to the information that can be obtained by the provider, that is, the server 709.
1. List of APs within a cell region
2. Channel used by each AP
3. TBTT and Beacon Transmission Interval of each AP This information may include the field of at least a part of 3.1 to 3.3 below.
3.1. Wireless LAN identifier (e.g. SSID in 3.1.1 below)
3.1.1. Service Set Identifier (hereinafter, referred to as "SSID"): a text of 32-byte length. The identifier that a user can usually view when searching for a neighboring wireless LAN.
3.2. Information on channel (e.g. 1ch, 3ch, 6ch) used by each AP and Priority information
3.3. Information on list of TBTTs of all APs and Beacon Transmission Intervals thereof (the information in 3.3.1 and/or 3.3.2)
3.3.1. List of TBTTs (e.g. GPS time value) indicated using the absolute time and interval values indicated using Time Unit (TU, 1024 usec), in a synchronization system
3.3.2. List of TBTTs (e.g. +11.21 sec) indicated using the relative time value and interval values indicated using TU, in an asynchronous system

In the case of the first embodiment, all APs use one TBTT and beacon transmission interval, whereas, in the case of the third embodiment, APs may use separate TBTTs and beacon transmission intervals. Therefore, information that the server 709 provides to the base station 703 will take the form of a list including TBTTs of APs and intervals thereof.

In step 715, the base station 703, which has received the neighboring AP information from the server 709, transmits beacon information to the UE 701 on the basis of the neighboring AP information received. The beacon information may take the form of Beacon Schedule IE. At this time, if there are multiple APs that have the same schedule information, the server 709 sends only one piece of schedule information to the base station 703 with respect to the multiple APs, thereby avoiding overlapping. A broadcast scheme or a unicast scheme may be used as a scheme for transmitting the beacon information. That is, as is the case that the base station 703 in a cellular network broadcasts information on other systems, the base station 703 can give information to all UEs within a cell region at once using a predetermined SystemInformationBlock (SIB) or can give the information to the UEs individually using a message of Radio Resource Control (hereinafter, referred to as "RRC") layer. The beacon information, which the base station 703 can transfer to a UE 701 in step 715, may include at least a part of the following information.
1. Whether a provider's wireless LAN AP is inside the region of the base station 703 (1 bit)
2. Or, the detailed information below may be transmitted instead of information in No. 1
2.1. A wireless LAN identifier that can be searched for by the current base station 703
2.1.1. The wireless LAN identifier may be, for example, SSID OR BSSID.
2.2. Wireless LAN AP channels and priority, which can be searched for by the current base station 703
2.3. Information on the list of TBTTs (indicated in combination of an SFN and a subframe number) of a beacon frame of each wireless LAN AP inside the region of the base station 703 and intervals thereof (indicated using TU or the number of subframes)
2.4. Window Width: Indicated using the number of subframes or msec

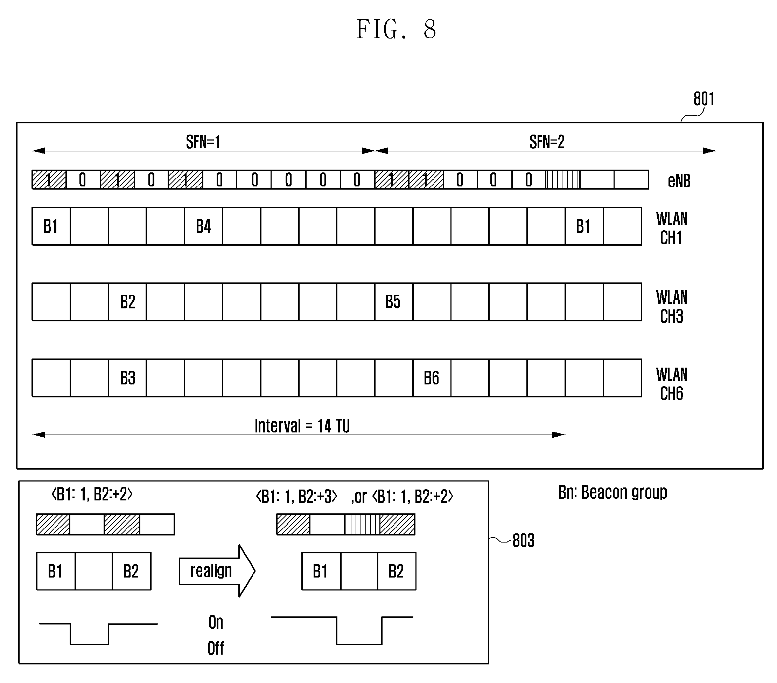

FIG. 8 illustrates beacon information according to the third embodiment of the present invention.

The list (beacon information) of TBTTs and intervals that have been received by the UE 701 in step 715 may be configured in the combination of an SFN and a subframe number or in the form of offset list.

According to a modified example, in the case of the list that consists of multiple TBTTs having the same interval, a subframe corresponding to a TBTT may be indicated (801) by 1 using a bitmap. In the first indicating manner 801, beacon groups, which are located on a wireless LAN channel 1, a wireless LAN channel 3 and a wireless LAN channel 6, are illustrated. Beacon groups B1 and B4 are located on the wireless LAN channel 1. Beacon groups B2 and B5 are located on the wireless LAN channel 3. Beacon groups B3 and B6 are located on the wireless LAN channel 6. The subframe corresponding to each beacon group is indicated by 1. A bitmap as indicated like this is provided to the UE 701. The UE attempts to receive a beacon in a subframe indicated by 1 using such a bitmap. The zeroth subframe of SFN = 1 corresponds to B1. The second subframe of SFN = 1 corresponds to B2 and B3. The forth subframe of SFN = 1 corresponds to B4. The zeroth subframe of SFN = 2 corresponds to B5. The first subframe of SFN = 2 corresponds to B6.

According to another modified example, each TBTT may be expressed as offset value in sequence according to the passage of time. For example, the each TBTT may be indicated in the manner such as TBTT = 10, TBTT= +2, and TBTT= +3. As mentioned above, when error due to floor calculation is accumulated, a readjustment is required.

The UE 701 uses the received beacon information in order to calculate System Frame Numbers (SFN) and subframes, which correspond to multiple beacon frame transmission TBTTs transmitted by multiple APs. The UE 701, in step 717, monitors an SFN included in a MIB transmitted by the base station 703. The UE 701 determines the beacon transmission time point in step 731. If an SFN corresponds to a TBTT, the UE 701 starts to search for a neighboring wireless LAN AP in the subframe within the SFN corresponding to the TBTT.

As a result of referring to the beacon information, when identifying the absence of a provider's wireless LAN AP inside the region of the base station 703, the UE 701 does not have to perform an operation for searching for a neighboring wireless LAN AP unnecessarily. If the power of a wireless LAN communication unit of the UE 701 is off, the UE 701 informs a user of the UE 701 of the existence of an accessible wireless LAN AP located around the UE through a display unit or other means, and may provide, to the user, an interface for asking whether to turn on the WLN power.

For the determination in step 731, the UE 701 monitors SFN information that included in a MIB received from the base station 703. Thereafter, the UE 701 switches the wireless LAN communication unit to a wake-up mode shortly before a subframe of an SFN corresponding to a TBTT. The UE 701 changes a channel to be searched for into an AP channel corresponding to a BSSID and remains in a receiving mode until receiving a beacon frame or during a scanning window width. When APs within a beacon group (A group) corresponding to the relevant time point use different channels, the channels may be selected in sequence according to priority.

When a beacon frame is received from a wireless LAN AP at the time 733 of searching for the first beacon group, the UE 701 identifies a wireless LAN identifier of the wireless LAN AP. After the beacon frame has been successfully received, the UE 701 calculates a TBTT value of a next corresponding group for the purpose of searching for the next second beacon group in step 735. The UE 701 calculates the corresponding SFN and subframe value when a TBTT of the second beacon group is set in the form of bitmap or in the form of offset with respect to a TBTT of the first beacon group. In step 737, the UE 701 switches a wireless LAN to a wake-up mode at the TBTT of the second beacon group and attempts to receive the beacon frame. When the time between step 735 and step 737 is long enough to be sufficiently effective in preventing the power consumption, the UE 701 switches a wireless LAN communication unit to a sleep mode or a deep sleep mode and monitors an SFN and/or a subframe value before step 737.

Thereafter, while identifying an SFN value transmitted from a base station to all entries on the TBTT list, the UE 701 continues to repeat the same process of receiving a beacon frame.

FIG. 8 illustrates beacon information according to the third embodiment of the present invention.

Referring to FIG. 8, it is assumed in the description on FIG. 8 that although wireless LAN APs have separate TBTTs, the wireless LAN APs have the same interval. The interval is indicated by TU and is, for example, determined as 14 TU. The UE 701 receives an interval value from the base station 703. Beacon groups 1 to 6 are indicated by B1 to B6, respectively. The corresponding TBTT is indicated in a TU slot within an interval.

The beacon information, which the UE 701 receives from the base station 703, includes an SFN and a subframe number, which match the corresponding TBTT. For example, the beacon information is indicated by B1 = (SFN = 1, subframe = 0), B2, B3 = (SFN = 1, subframe = 2), and B6 = (SFN = 2, subframe = 1). According to a modified example, beacon information is indicated by a subframe number corresponding to a TBTT within an interval. For example, B6 = 2*10 + 1 = 21.

B2 and B3 have the same TBTT and interval but use separate wireless LAN channels (channel 3, channel 6), and thus are separated into separate groups and transmitted. With respect to B2 and B3 at the same TBTT, the UE 701 receives a beacon frame on a corresponding channel on the basis of channel priority.

According to another manner for indicating a TBTT that constitute beacon information in step 713, a TBTT is indicated in the form of bitmap for a subframe corresponding to an interval (indicating manner 801). Herein, 15 subframes correspond to the region indicating all intervals. Therefore, if indicated by a subframe bitmap, the TBTT of each beacon is 10101000001100. Therefore, the amount of information of Beacon Schedule IE can be reduced in step 713. If APs have separate interval values, the size of bitmap according to the largest interval value is selected.

According to still another indicating manner, beacon information is indicated by a value (offset) relative to a TBTT of the first beacon group (indicating manner 803). For example, if the timing information expressed by a bitmap according to the manner indicated by 801 is modified into the manner 803, the modified timing information is B1 = (SFN = 1, subframe = 0), B2, B3 = (subframe = +2), and B4 = (subframe = +4). In this method, as noted from the box 803, the offset values may become different when the wireless LAN and the base station subtrame are not aligned with each other. In the box 803, although B1 and B2 have a difference of one subframe in the left TBTT, they may have a difference of two subframes thereafter as noted from the right figure. However, in both cases, the offset value is maintained to be one subframe to exclude (prevent) the possibility of losing the beacon frame and reduce the burden of the base station for retransmitting the changed offset value. Therefore, in the box 803, when the offset value is maintained to be one subframe, the wireless LAN communication unit continuously receives the beacon frame without sleep as indicated by the dotted line.

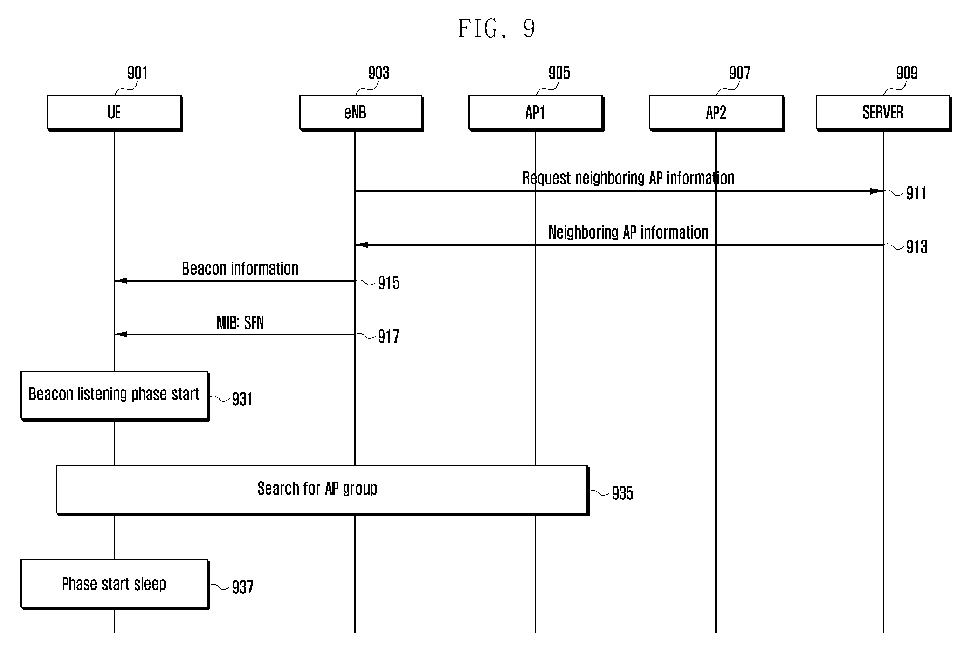

FIG. 9 is a flowchart illustrating a process of searching for a wireless LAN AP according to the forth embodiment of the present invention.

Referring to FIG. 9, it is assumed in the embodiment of FIG. 9 that Target Beacon Transmission Times (TBTT) and separate interval values of Access Points (hereinafter, referred to as "APs") 905 and 907 of a wireless LAN, which are operated by a network provider, may be configured to have different values, respectively. Also, although an AP initially has the same TBTT value, the AP may have a TBTT capable of having various values due to the occurrence of clock drift according to time. In this case, APs may have separate TBTTs and separate interval values or have separate TBTTs and the same interval. In an embodiment in FIG. 9, it is assumed that there is a server 909 for managing the location of a wireless LAN AP that is operated by a network provider (or can be operated by the network provider).

In this case, in step 911, each base station 903 in a cellular network transmits, to the server 909, a message requesting for the list of TTBTs of wireless LAN APs inside of the signal region of the base station 903 and intervals thereof, that is, neighboring AP information. The server 909, which has received the neighboring AP information request message, transmits information on the neighboring AP information to the base station 903. The neighboring AP information may include whether an AP that is operated by a provider exists inside the region of the base station 903 and/or beacon frame transmission information. According to another embodiment, step 911 is omitted and the server 909 can transmit neighbor AP information to the base station 903, on a periodic base or when predetermined conditions have been satisfied. According to another modified example, the base station 903 may obtain neighboring AP information in another manner, instead of receiving the neighboring AP information from the server 909.

Information that can be contained in the neighboring AP information may include at least a part of the following. In the following description, although the information has not been limited to information on a "provider's" AP, if the provider cannot actually manage an AP or cannot obtain information on the AP, the information on the AP will certainly not be included in the information of the surroundings below. Therefore, the information included in the neighboring AP information will be limited to the information that can be obtained by the provider, that is, the server 309.
1. List of APs within a cell region
2. Channel used by each AP
3. TBTT and Beacon Transmission Interval of each AP This information may include the field of at least a part of 3.1 to 3.3 below.
3.1. Wireless LAN identifier (e.g. SSID in 3.1.1 below or BSSID in 3.1.2 below)
3.1.1. Service Set Identifier (hereinafter, referred to as "SSID"): a text of 32-byte length. The identifier that a user can usually see when searching for a neighboring wireless LAN
3.1.2. BSSID
3.2. Information on channel (e.g. 1ch, 3ch, 6ch) used by each AP and Priority information
3.3. Information on list of TBTTs of all APs and Beacon Transmission Intervals thereof (the information in 3.3.1 and/or 3.3.2)
3.3.1. List of TBTTs (e.g. GPS time value) indicated using the absolute time and interval values indicated using Time Unit (TU, 1024 usec), in a synchronization system
3.3.2. List of TBTTs (e.g. +11.21 sec) indicated using the relative time value and interval values indicated using TU, in an asynchronous system

In step 915, the base station 903, which has received the neighboring AP information from the server 909, transmits beacon information to the UE 901 on the basis of the neighboring AP information received. The beacon information may be configured, for example, in the form of a Beacon Schedule IE. At this time, if there are multiple APs that have the same schedule information, the server 909 sends only one piece of schedule information to the base station 903 with respect to the multiple APs, thereby avoiding overlapping. A broadcast scheme or a unicast scheme may be used as a scheme for transmitting the beacon information. That is, as is the case that the base station 903 in a cellular network broadcasts information on other systems, the base station 903 can give information to all UEs within a cell at once using a predetermined SystemInformationBlock (SIB) or can give the information to UEs individually using a message of Radio Resource Control (hereinafter, referred to as "RRC") layer. Information, which can be provided to the UE in step 915, may include at least a part of the following.
1. Whether a provider's wireless LAN AP is inside the region of the base station 703 (1 bit)
2. Or, the detailed information below may be transmitted instead of information in No. 1
2.1. A wireless LAN identifier that can be searched for by the current base station 703
2.1.1. The wireless LAN identifier may be, for example, SSID OR BSSID.
2.2. Wireless LAN AP channels and priority, which can be searched for by the current base station 703
2.3. Listening window information of a beacon frame of each channel Beacon listening phase list information configured by subframe values indicating a start subframe or window interval, offset value, and a window width.

Beacon information, which has been received by the UE 901 in step 915, includes wireless LAN channel information, start subframe information, and window width information. The start subframe information is indicated by a beacon frame reception start subframe list or a listening window interval and offset.

The base station 903 divides the period of multiple beacon frames into a listening phase and a sleep phase on the basis of the TBTT and interval list received from the server 909, and transmits window configuration information for the listening phase to the UE 901. For example, CH = 1, Listen_start = (SFN = 1, subframe number = 2) or subframe (= SFN * 10 + subframe number) mod interval - offset, Listen_duration = 50 subframes). The UE 901 that has received the window configuration information continues to monitor, in step 917, an SFN included in a MIB transmitted by the base station 903. If a subframe is within an SFN corresponding to the listening window start point received, a UE 931 starts to search for a neighboring wireless LAN AP in step 931. As a result of analyzing the beacon information, when a provider's wireless LAN AP is determined not to be inside the region of the base station, the UE 901 does not have to unnecessarily perform an operation for searching for a neighboring wireless LAN AP. If the power of a wireless LAN communication unit of the UE 901 is off, the UE 901 may inform a user of the UE 901 of the existence of an accessible wireless LAN AP located around the UE through a display unit or other means, and may provide, to the user, an interface for asking whether to turn on the WLN power.

For the determination in step 931, the UE 901 continuously monitors SFN information that is included in a MIB received from the base station 903. Thereafter, the UE 901 switches the wireless LAN communication unit to a wake-up mode shortly before a subframe of an SFN corresponding to a TBTT. Terminal 901, in step, 935, changes a channel to be searched for into an AP channel corresponding to a BSSID and remains in a sleep mode up to a listening window stop subframe.

In step 937, the UE 901 changes a wireless LAN communication unit, which maintains a listening window state during a listening window, into a sleep mode or a deep sleep mode up to the next listening window of the same channel or another channel. The UE 901 continues to monitor an SFN and a subframe value in order to identify the start of a next listening phase.

Thereafter, while identifying an SFN value of an MIB transmitted from the base station 903 to all entries within a Beacon Listening Phase list, the UE 901 continues to repeat the same process of receiving a beacon frame.

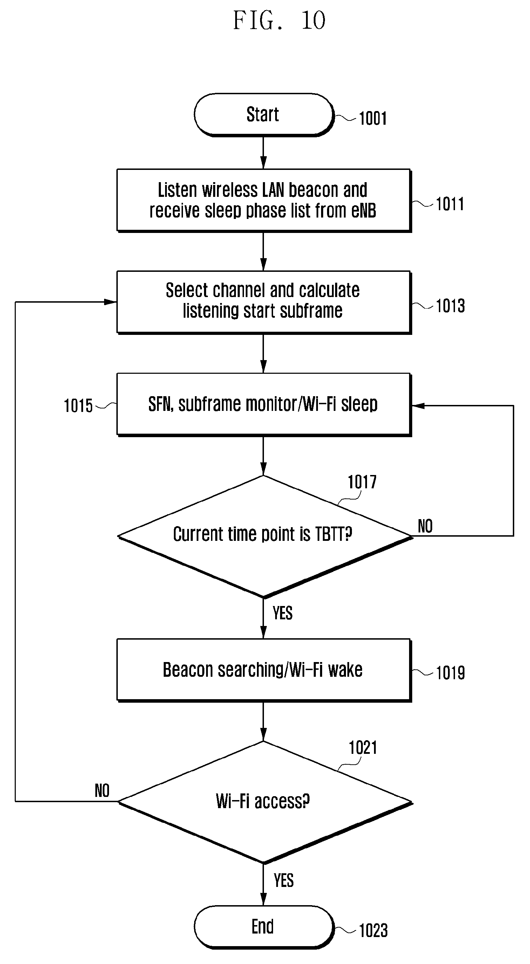

FIG. 10 is a flowchart illustrating a process of searching for a wireless LAN AP by a UE according to the forth embodiment of the present invention.

Referring to FIG. 10, in step 1011, the UE 901 receives beacon information from the base station 903. The received beacon information may include at least a part of the following.
1. Whether a provider's wireless LAN AP is inside the region of the base station 903 (1 bit)
2. Or, the detailed information below may be transmitted instead of information in No. 1
2.1. A wireless LAN identifier that can be searched for by the current base station 903
2.1.1. The wireless LAN identifier may be, for example, SSID OR BSSID.
2.2. Wireless LAN AP channels and priority, which can be searched for by the current base station 703
2.3. Beacon Listening Window information corresponding to each wireless LAN AP (Listening window start subframe, interval and window length)

In step 1013, the UE 901 selects a wireless LAN channel using the received beacon information and calculates a listening window start subframe. A listening window starting point and a listening window length (window width) may be transmitted in the form of a subframe number. In step 1015, the UE 901 monitors an SFN/subframe number in a sleep mode. In step 1017, the UE 901 continuously verifies SFN information through a MIB transmitted from the base station 903 determines whether the current time point corresponds to a listening window starting point using an internal clock. If the current SFN and subframe are prior to a reception starting point, the process proceeds to step 915 and the UE 901 continues to monitor the SFN and the subframe. If the current subframe corresponds to a listening start subframe, the process proceeds to step 1019. In step 1019, the UE 901 switches a wireless LAN communication unit to a wake-up mode and receives a beacon frame during a listening window length (width). Also, in step 1019, the UE 901 searches for neighboring wireless LAN AP beacon frames through a passive scanning and, in step 1021, the UE 901 performs the process of accessing the wireless LAN AP when the searched AP is identical to a wireless LAN identifier that is included in the beacon information received. If the UE 901 is continuously connected to a base station without accessing a wireless LAN or fails to receive a beacon frame, or if the UE 901 has attempted to access a wireless LAN but cannot access the wireless LAN, the UE changes a channel to be searched for into a channel corresponding to a next listening window entry and switches a wireless LAN communication unit to a sleep mode. The UE 901 remains in a sleep mode during the time corresponding to a sleep window while maintaining the current channel to be searched for. The UE 901 may access a wireless LAN AP through the general process of accessing a wireless LAN and transceive data.

In the above-mentioned embodiments, the description has been made of, for example, a system in which a cellular network and a wireless LAN are combined with each other. The embodiments of the present invention, however, are not limited thereto and may be applied to a system in which different heterogeneous networks are combined with each other.

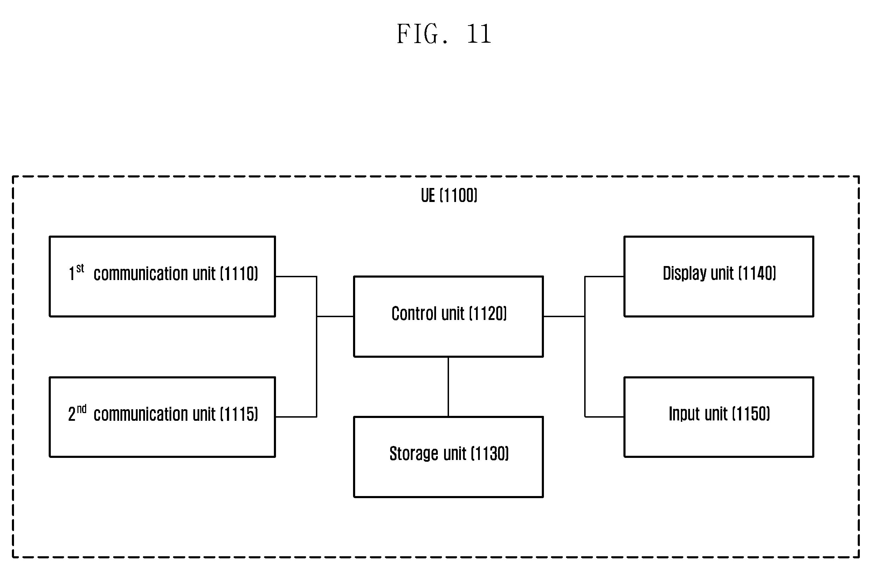

FIG. 11 is a block diagram of the UE 1100 according to an embodiment of the present invention.

Referring to FIG. 11, the UE 1100 corresponds to UEs 301, 601, 710, and 901 in FIGs. 3, 6, 7 and 9. The UE 1100 includes a first communication unit 1110, a second communication 1115, a control unit 1120, a storage unit 1130, a display unit 1140, and an input unit 1150. The communication unit 1110 communicates with a base station according to any one manner of the above-mentioned embodiments and receives information required for communicating through the second communication 1115. The control unit 1120 controls the second communication unit 1115 according to the above-mentioned embodiments and searches for a base or an AP, communication with which is performed through the second communication unit. If there is too much communication traffic and needs to be appropriately distributed, the control unit 1120 can distribute some traffic and transfer distributed traffic to a base station, communication with which is performed through the first communication 1110. The second communication unit 1115 accesses, for example, a wireless LAN or a base station suitable for the second communication unit, and then distributes and transmits, through the base station, traffic toward a base station, communication with which is performed through the first communication unit 1110. The display unit 1140 and the input unit 1150 informs a user that it is possible to communicate through the second communication unit 1115, and provides an interface that is capable of selecting whether to turn on or off the power of the second communication unit 1115. The storage unit 1130 stores information for scheduling the scanning of a base station, communication with which is performed through the second communication unit 1115. In the above-mentioned embodiments, the first communication unit 1110 is illustrated as an example of a communication unit for accessing a cellular base station (a first communication network base station) and the second communication unit 1115 is illustrated as an example of a communication for accessing a wireless LAN AP (a second communication network base station).

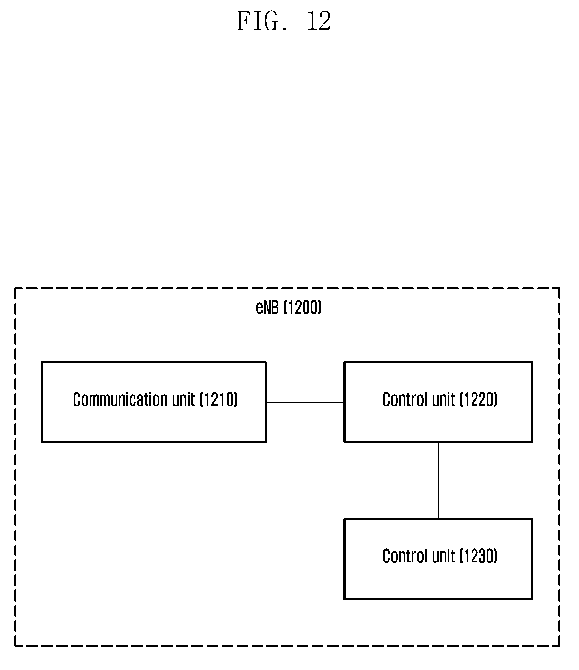

FIG. 12 is a block diagram of a first communication network base station 1200 according to an embodiment of the present invention.

Referring to FIG. 12, a base station 1200 according to an embodiment of the present invention includes a communication unit 1210, a control unit 1220, and a storage unit 1230. The communication unit 1210 communicates with the UE 1100 and provides information for searching for the second communication network base station to the UE 1100 through a first communication network on the basis of any one of the above-mentioned embodiments. Also, the communication unit 1210 may receive information on the second communication network base station from the servers 309, 709, and 909. The control unit 1220 controls the overall operations of the base station 1200 that the base station 1200 operates on the basis of any one of the above-mentioned embodiments. The storage unit 1230 stores the information on the second communication network base station from the servers 309, 709, and 909.

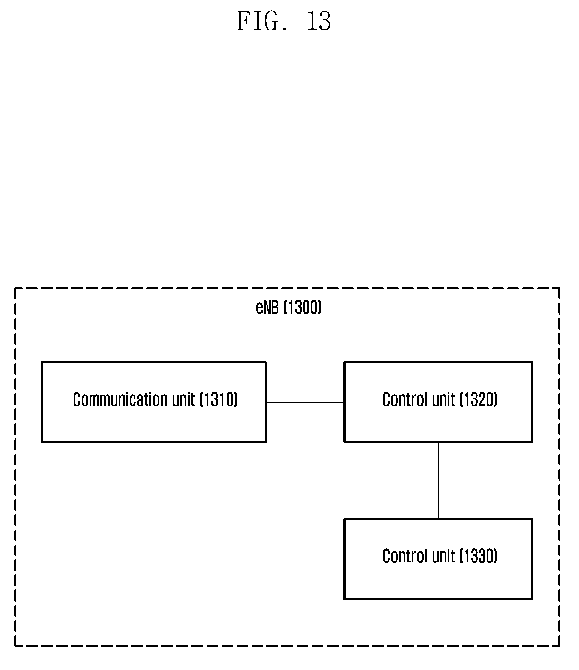

FIG. 13 is a block diagram of a second communication network base station 1300 according to an embodiment of the present invention.

Referring to FIG. 13, a base station 1300, according to an embodiment of the present invention, includes a communication unit 1310, a control unit 1320, and a storage unit 1330. The communication unit 1310 communicates with the UE 1100, receives traffic from the UE 1100 on the basis of any one of the above-mentioned embodiments, and transmits the received traffic to the base station 1200, thereby providing the function to distribute the traffic. On the other hand, the traffic may be received from the base station 1200 and then provided to the UE 1100. The control unit 1320 controls overall operations of the base station 1300 that the base station 1300 operates, on the basis of any one of the above-mentioned embodiments. The storage unit 1330 stores information required for an operation of the traffic distribution function.

Here, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

And each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the "unit" or "module" refers to a software element or a hardware element, such as a Field Programmable Gate Array (FPGA) or an Application Specific Integrated Circuit (ASIC), which performs a predetermined function. However, the "unit" or "module" does not always have a meaning limited to software or hardware. The "unit" or "module" may be constructed either to be stored in an addressable storage medium or to execute one or more processors. Therefore, the "unit" or "module" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" or "module" may be either combined into a smaller number of elements, "unit", or "module" or divided into a larger number of elements, "unit", or "module". Moreover, the elements and "units" or "modules" may be implemented to reproduce one or more CPUs within a device or a security multimedia card.

Those skilled in the art can appreciate that it is possible to implement the present invention in another specific form without changing the technical idea or the indispensable characteristics of the present invention. Accordingly, it should be understood that the embodiments described above are merely exemplary and are not limited. The scope of the present invention is defined by the appended claims to be described later, rather than the detailed description. Accordingly, it should be appreciated that all modifications or variations derived from the meaning and scope of the appended claims and their equivalents are included in the range of the present invention.

### [industrial applicability]

Although exemplary embodiments of the present invention have been shown and described in this specification and the drawings, they are used in general sense in order to easily explain technical contents of the present invention, and to help comprehension of the present invention, and are not intended to limit the scope of the present invention. It is obvious to those skilled in the art to which the present invention pertains that other modified embodiments on the basis of the spirits of the present invention besides the embodiments disclosed herein can be carried out.

## Claims

1. A communication method by a user equipment comprising:
receiving information on a second communication network base station from a first communication network base station through a first communication unit; and
scanning the second communication network base station by using the information on the second communication network base station.

2. The communication method of claim 1, wherein
the information on the second communication network base station comprises information on a scanning starting point.

3. The communication method of claim 2, wherein
scanning the second communication network base station, using the information on the second communication network base station, further comprises:
scanning during a scanning window width from the scanning starting point;
turning on the power of the second communication unit in order to scan the second network base station before the scanning starting point; and
turning off the power of the second communication unit when a communication through the second communication network is not executed as a result of scanning.

4. The communication method of claim 1, wherein
the information on the second communication network base station comprises information on a communication network identifier, a scanning starting point and a channel to be scanned at the scanning starting point.

5. A user equipment comprising:
a first communication unit for receiving information on a second communication network base station from a first communication network base station; and
a second communication unit for scanning the second communication network base station, using the information on the second communication network base station.

6. The user equipment of claim 5, wherein
the information on the second communication network base station comprises information on a scanning starting point.

7. The user equipment of claim 6, wherein
the second communication unit further comprises a control unit for: scanning during a scanning window width from the scanning starting point;
turning on the power of the second communication unit in order to scan the second communication network base station before the scanning starting point; and turning off the power of the second communication unit when a communication through a second communication network is not executed as result of scanning.

8. The user equipment of claim 5, wherein
the information on the second communication network base station comprises information on a communication network identifier, a scanning starting point and a channel to be scanned at the scanning starting point.

9. A communication method of a base station providing a first communication network service, the communication method comprising:
transmitting, to a user equipment, information on a second communication network base station inside of the region of the base station; and
ordering the user equipment to distribute traffic through the second communication network base station, when receiving, from the user equipment, a report indicating that the second communication network base station has been found.

10. The communication method of claim 9, wherein
the information on the second communication network base station comprises information on a scanning starting point.

11. The communication method of claim 9, wherein
the information on the second communication network base station comprises information on a communication network identifier, a scanning starting point, and a channel to be scanned at the scanning starting point.

12. A base station providing a first communication network service, the base station comprising:
a communication unit that transmits, to a user equipment, information on a second communication network base station inside the region of the base station and orders the user equipment to distribute traffic through the second communication network base station, when receiving, from the user equipment, a report of indicating that the second communication network base station has been founded.

13. The base station of claim 12, wherein
the information on the second communication network base station comprises information on a scanning starting point.

14. The base station of claim 12, wherein
the information on the second communication network base station comprises information on a communication network identifier, a scanning starting point, and a channel to be scanned at the scanning starting point.
